# EUROPEAN PATENT APPLICATION

(11) **EP 4 751 797 A1**
(43) Date of publication of application: **03.06.2026**
(21) Application number: 24862582.4
(22) Date of filing: 21.08.2024
(51) Int. Cl.: B01D 53/14

(54) **METHOD FOR SEPARATING AND RECOVERING CARBON DIOXIDE**

(30) Priority: 06.09.2023 JP 2023144186
(71) Applicant: INPEX Corporation, Tokyo 107-6332 (JP); Tokyo Metropolitan Public University Corporation, Shinjuku-ku Tokyo 163-0926 (JP)
(72) Inventor: SANO, Yosuke, Tokyo 107-6332 (JP); YOSHIDA, Takuya, Tokyo 107-6332 (JP); KUMAGAI, Takuya, Tokyo 107-6332 (JP); YAMAZOE, Seiji, Hachioji-shi, Tokyo 192-0397 (JP); KIKKAWA, Soichi, Hachioji-shi, Tokyo 192-0397 (JP)
(74) Representative: Grünecker Patent- und Rechtsanwälte PartG mbB
(86) International application number: PCT/JP2024/029681
(87) International publication number: WO 2025/052928

(57) **Abstract**

A method for separating and recovering carbon dioxide is a method for separating and recovering carbon dioxide, comprising: (a) a step of separating carbon dioxide from a gas containing carbon dioxide, the step comprising obtaining a precipitate by bringing a solution of an amine compound A, which has a property of solidifying by reacting with carbon dioxide, into contact with the gas; (b) a step of storing the precipitate; and (c) a step of desorbing carbon dioxide from the stored precipitate and obtaining the amine compound A by using clean energy, wherein in one day, there is a time period during which step (c) is performed and a time period during which step (c) is not performed.

## Description

### Technical Field

The present invention relates to a method for separating and recovering carbon dioxide.

### Background Art

Various methods are being studied for directly recovering carbon dioxide from the atmosphere. For example, Patent Literature 1 discloses a method for removing CO₂ in combustion exhaust gas, characterized by bringing an aqueous solution containing a specific diamine compound into contact with combustion exhaust gas under atmospheric pressure.

### Citation List

### Patent Literature

[Patent Literature 1] Japanese Unexamined Patent Publication No. H8-257353

### Summary of Invention

### Technical Problem

In existing methods for separating and recovering carbon dioxide using an amine solution, energy is required to recover carbon dioxide from the aqueous amine solution after the carbon dioxide is absorbed into the amine solution. Normally, the recovery of carbon dioxide is carried out constantly, but if the energy required for carbon dioxide recovery is supplied by an energy production method that emits carbon dioxide (for example, thermal power generation), carbon dioxide is generated by the energy production, which is not preferable because it increases the amount of carbon dioxide to be separated and recovered.

An object of the present invention is to provide a method for separating and recovering carbon dioxide, which method is capable of sufficiently reducing the amount of newly generated carbon dioxide when carrying out this method.

### Solution to Problem

One aspect of the present invention relates to a method for separating and recovering carbon dioxide, comprising: (a) a step of separating carbon dioxide from a gas containing carbon dioxide, the step comprising obtaining a precipitate by bringing a solution of an amine compound A, which has a property of solidifying by reacting with carbon dioxide, into contact with the gas; (b) a step of storing the precipitate; and (c) a step of desorbing carbon dioxide from the stored precipitate and obtaining the amine compound A by using clean energy.

According to the present invention, when the amine compound absorbs carbon dioxide, the amine compound solidifies to become a precipitate, and therefore the precipitate of the amine compound that has absorbed carbon dioxide can be stored. Then, by desorbing carbon dioxide from the stored precipitate when clean energy is available, carbon dioxide can be separated and recovered from a gas containing carbon dioxide without increasing the amount of carbon dioxide to be separated and recovered. In contrast, in existing methods for separating and recovering carbon dioxide using an amine solution, the amine compound after recovering carbon dioxide exists in a state dissolved in the solution. Therefore, if the amine compound is to be stored after absorbing carbon dioxide, it needs to be stored in the state of an amine solution, which requires a huge tank for storing the amine solution, leading to an increase in equipment costs and is not practical.

Further, in the method, step (c) may be performed during an upward demand response of energy. Since energy costs are generally low during an upward demand response, it is preferable to perform step (c) during the upward demand response.

Further, the method may further comprise a step of storing the carbon dioxide recovered through step (c) underground. By performing this step, the recovered carbon dioxide can be confined underground.

That is, the present invention includes the following [1] to [3].
[1] A method for separating and recovering carbon dioxide, comprising:
   (a) a step of separating carbon dioxide from a gas containing carbon dioxide, the step comprising obtaining a precipitate by bringing a solution of an amine compound A, which has a property of solidifying by reacting with carbon dioxide, into contact with the gas;
   (b) a step of storing the precipitate; and
   (c) a step of desorbing carbon dioxide from the stored precipitate and obtaining the amine compound A by using clean energy.
[2] The method for separating and recovering carbon dioxide according to [1], wherein step (c) is performed during an upward demand response of energy.
[3] The method for separating and recovering carbon dioxide according to [1] or [2], further comprising a step of storing the carbon dioxide recovered through step (c) underground.

### Advantageous Effects of Invention

According to the present disclosure, it is possible to provide a method for separating and recovering carbon dioxide, which method is capable of sufficiently reducing the amount of newly generated carbon dioxide when carrying out this method.

### Brief Description of Drawings

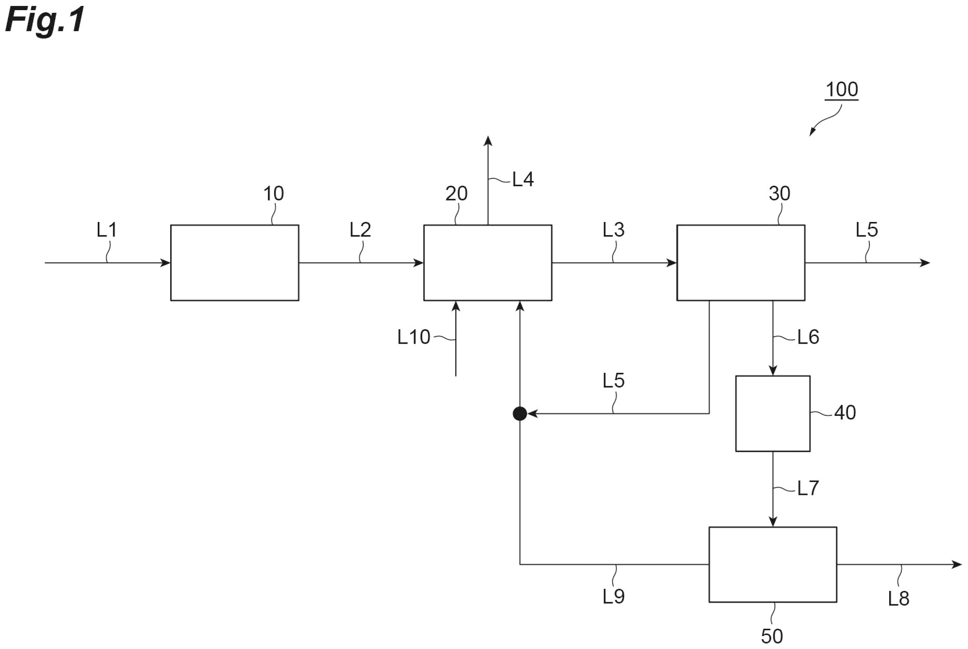

[FIG. 1] FIG. 1 is a schematic diagram showing an embodiment of a carbon dioxide separation and recovery system according to the present invention.

### Description of Embodiments

Hereinafter, embodiments of the present disclosure will be described in detail with reference to the drawings. In the following description, the same or corresponding parts are denoted by the same reference signs, and redundant description will be omitted. Further, positional relationships such as up, down, left, and right shall be based on the positional relationships shown in the drawings unless otherwise specified.

### [Carbon Dioxide Separation and Recovery System]

FIG. 1 is a schematic diagram showing a carbon dioxide separation and recovery system according to the present embodiment. The carbon dioxide separation and recovery system 100 (hereinafter, also referred to as "system 100") shown in this figure includes a cooling device 10, a carbon dioxide absorption device 20 (hereinafter, also referred to as "absorption device 20"), a solid-liquid separation device 30, a storage container 40, and an amine regeneration device 50 (hereinafter, also referred to as "regeneration device 50"). In the system 100, carbon dioxide is separated from a gas by utilizing gas-liquid contact between the gas and a solution containing a specific amine compound in the absorption device 20, and at the same time, the amine compound solidifies and a precipitate is generated. The precipitate is separated by the solid-liquid separation device 30 and then stored in the storage container 40. The stored precipitate is processed in the regeneration device 50, where carbon dioxide is desorbed from the precipitate, and the precipitate is regenerated into a liquid amine compound.

The cooling device 10 is a device that cools the gas transferred through a flow path L1. The gas transferred through L1 contains at least carbon dioxide. The gas may be a gas mixed with gases other than carbon dioxide, and may be, for example, exhaust gas from a factory, exhaust gas from an automobile, or the like. The cooling of the gas may be performed, for example, by bringing the gas into contact with water. Further, the system 100 may not include the cooling device 10, and the gas may be cooled by bringing a solution of a specific amine compound into contact with the gas in the absorption device 20.

The gas that has passed through the cooling device 10 is also transferred to the absorption device 20 through a flow path L2. The absorption device 20 is a device that separates carbon dioxide from a gas and obtains a precipitate by utilizing gas-liquid contact between the gas and a solution containing an amine compound A, which will be described later. The solution containing the amine compound A is supplied through a flow path L10. The solution containing the amine compound A may include the amine compound A supplied through flow paths L5 and L9, which will be described later.

The amine compound A in the present embodiment is a compound represented by the following formula (1).

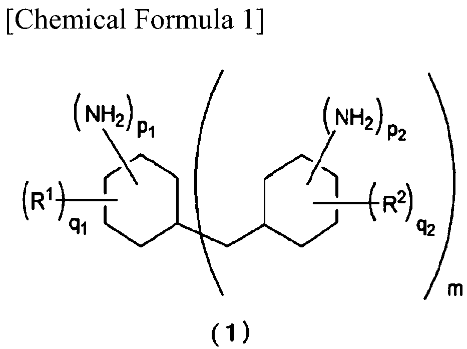

In formula (1), m is 0 or 1; R¹ and R² are each independently an alkyl group, an alkoxy group, a carboxy group, an alkyloxycarbonyl group, a formyl group, an alkylcarbonyl group, an alkylthio group, a sulfo group, an alkyloxysulfonyl group, a nitro group, a hydroxyl group, a thiol group, a cyano group, or a halogen atom. The alkyl group may have a substituent. p₁ and p₂ are each independently 1 or 2. When m is 0, q₁ is an integer from 0 to 11, provided that p₁ + q₁ is 12 or less, and when m is 1, q₁ is an integer from 0 to 10, provided that p₁ + q₁ is 11 or less. q₁ is an integer from 0 to 10, and when q₁ is an integer of 2 or more, two or more R¹s may be the same as or different from each other, and when q₂ is an integer of 2 or more, two or more R²s may be the same as or different from each other, and when q₁ is an integer of 2 or more and two or more R¹s are alkyl groups which may have a substituent, two or more R¹s may be bonded to each other to form a ring, and when q₂ is an integer of 2 or more and two or more R²s are alkyl groups which may have a substituent, two or more R²s may be bonded to each other to form a ring. However, the case where m is 0, p₁ is 2, and the two amino groups to which p₁ is attached are arranged in a meta position to each other is excluded.

The compound represented by the above formula (1) is preferably a compound represented by the following general formula (11A), (12A), or (11B).

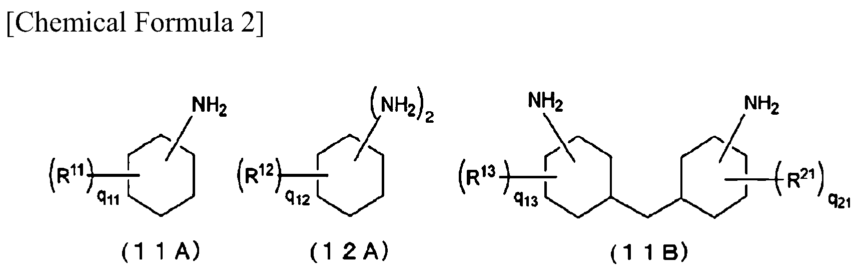

In the formulae, R¹¹, R¹², R¹³, and R²¹ are each independently an alkyl group having 1 to 10 carbon atoms, an alkoxy group having 1 to 10 carbon atoms, a carboxy group, an alkyloxycarbonyl group having 2 to 11 carbon atoms, a formyl group, an alkylcarbonyl group having 2 to 11 carbon atoms, an alkylthio group having 1 to 10 carbon atoms, a sulfo group, an alkyloxysulfonyl group having 1 to 10 carbon atoms, a nitro group, a hydroxyl group, a thiol group, a cyano group, or a halogen atom. The alkyl group may have an amino group as a substituent. q₁₁ and q₁₂ are each independently an integer from 0 to 6. When q₁₁ is an integer of 2 or more, two or more R¹¹s may be the same as or different from each other, and when q₁₂ is an integer of 2 or more, two or more R¹²s may be the same as or different from each other. When q₁₁ is an integer of 2 or more and two or more R¹¹s are alkyl groups which may have an amino group as a substituent, two or more R¹¹s may be bonded to each other to form a ring, and when q₁₂ is an integer of 2 or more and two or more R¹²s are alkyl groups which may have an amino group as a substituent, two or more R¹²s may be bonded to each other to form a ring. q₁₃ and q₂₁ are each independently an integer from 0 to 4, and when q₁₃ is an integer of 2 or more, two or more R¹³s may be the same as or different from each other, and when q₂₁ is an integer of 2 or more, two or more R²¹s may be the same as or different from each other, and when q₁₃ is an integer of 2 or more and two or more R¹³s are alkyl groups which may have an amino group as a substituent, two or more R¹³s may be bonded to each other to form a ring, and when q₂₁ is an integer of 2 or more and two or more R²¹s are alkyl groups which may have an amino group as a substituent, two or more R²¹s may be bonded to each other to form a ring. However, the case where, in general formula (12A), two amino groups directly bonded to carbon atoms constituting the cyclohexane ring skeleton are arranged in a meta position to each other is excluded.

The compound (11A), the compound (12A), or the compound (11B) is preferably a compound represented by the following general formula (111A), (121A), (122A), or (111B).

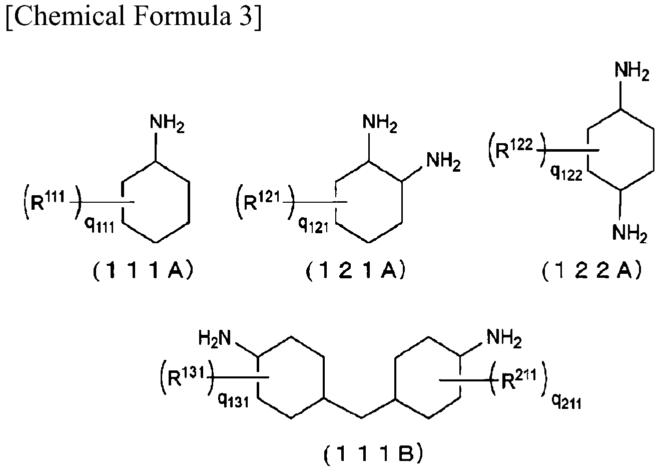

In the formulae, R¹¹¹, R¹²¹, R¹²², R¹³¹, and R²¹¹ are each independently an alkyl group having 1 to 5 carbon atoms, an alkoxy group having 1 to 5 carbon atoms, an alkyloxycarbonyl group having 2 to 6 carbon atoms, a formyl group, an alkylcarbonyl group having 2 to 6 carbon atoms, an alkylthio group having 1 to 5 carbon atoms, a hydroxyl group, a thiol group, a cyano group, or a halogen atom. The alkyl group may have an amino group as a substituent. q₁₁₁, q₁₂₁, and q₁₂₂ are each independently an integer from 0 to 4. When q₁₁₁ is an integer of 2 or more, two or more R¹¹¹s may be the same as or different from each other, when q₁₂₁ is an integer of 2 or more, two or more R¹²¹s may be the same as or different from each other, and when q₁₂₂ is an integer of 2 or more, two or more R¹²²s may be the same as or different from each other. When q₁₁₁ is an integer of 2 or more and two or more R¹¹¹s are alkyl groups which may have an amino group as a substituent, two or more R¹¹¹s may be bonded to each other to form a ring, when q₁₂₁ is an integer of 2 or more and two or more R¹²¹s are alkyl groups which may have an amino group as a substituent, two or more R¹²¹s may be bonded to each other to form a ring, and when q₁₂₂ is an integer of 2 or more and two or more R¹²²s are alkyl groups which may have an amino group as a substituent, two or more R¹²²s may be bonded to each other to form a ring. q₁₃₁ and q₂₁₁ are each independently an integer from 0 to 2, and when q₁₃₁ is 2, the two R¹³¹s may be the same as or different from each other, and when q₂₁₁ is 2, the two R²¹¹s may be the same as or different from each other, and when q₁₃₁ is 2 and the two R¹³¹s are alkyl groups which may have an amino group as a substituent, the two R¹³¹s may be bonded to each other to form a ring, and when q₂₁₁ is 2 and the two R²¹¹s are alkyl groups which may have an amino group as a substituent, the two R²¹¹s may be bonded to each other to form a ring.

In the present embodiment, the property of the amine compound A to solidify by reacting with carbon dioxide is utilized. Therefore, it is preferable to bring the solution of the amine compound A into contact with the gas under conditions where the reaction product of the amine compound A and carbon dioxide (precipitate; carbamic acid derivative) is likely to precipitate. As measures to facilitate the precipitation of the reaction product of the amine compound A and carbon dioxide, the following measures are specifically conceivable. (1) Lowering the reaction temperature during the reaction between the amine compound A and carbon dioxide. (2) Increasing the concentration of the amine compound A in the solution. (3) Using a diamine (one having two amino groups) as the amine compound A. (4) Increasing the contact area between the solution and the air.

From the viewpoint of (1) above, the temperature inside the absorption device 20 is, for example, 0 to 90°C or 5 to 60°C, and preferably 5 to 40°C. From the viewpoint of (2) above, the concentration of the amine compound A in the solution is, for example, 0.05 to 10 M, preferably 0.08 to 3 M, and more preferably 0.1 to 1 M. The concentration unit "M" represents "mol/L". In addition, when the amine compound A is a liquid under the environment inside the absorption device 20, the amine compound A may be diluted with a solvent or may be used without being diluted with a solvent.

The solution of the amine compound A contains, for example, water as a solvent. The solvent is not limited to water and may be an organic solvent. Examples of the organic solvent include sulfoxides such as dimethyl sulfoxide (DMSO); amides such as N,N-dimethylformamide (DMF) and N,N-dimethylacetamide (DMAc); lactams (cyclic amides) such as N-methyl-2-pyrrolidone; alcohols such as methanol, ethanol, and 2-propanol (IPA); hydrocarbons (aromatic hydrocarbons) such as toluene, o-xylene, m-xylene, and p-xylene; ethers (compounds having an ether bond) such as tetrahydrofuran (THF), 1,4-dioxane, tetrahydropyran, dibutyl ether, and 1,2-dimethoxyethane; nitriles (compounds having a cyano group) such as propionitrile and acetonitrile; and esters (carboxylic acid esters) such as ethyl acetate and butyl acetate. The solvent preferably has polarity. Further, the solvent is preferably one that has a high boiling point and a low vapor pressure at room temperature. By using such a solvent, vaporization of the solvent can be suppressed. From such a viewpoint, the boiling point of the solvent is preferably 100°C or higher, and may be, for example, 190°C or higher. The boiling point of the solvent is, for example, 200°C or lower, from the viewpoint of being relatively easy to obtain. As the solvent, one type may be used alone, or two or more types may be used in combination. As the solvent, an aqueous mixed solvent containing water and one or more organic solvents may be used, or a non-aqueous mixed solvent composed of two or more organic solvents may be used. Further, the amine compound may be used without being diluted with a solvent.

After passing through the absorption device 20, the solution containing the precipitate is transferred to the solid-liquid separation device 30 through a flow path L3, and the gas from which carbon dioxide has been separated is transferred through a flow path L4. The solid-liquid separation device 30 is for separating the precipitate from the solution.

The solid-liquid separation device 30 is configured by, for example, a combination of a hydrocyclone and a filter. The solution containing the precipitate is sent to the hydrocyclone and separated into the precipitate and the solution. The solution is transferred to a filter, and the precipitate remaining in the solution is filtered out by the filter. The precipitate adhering to the filter may be recovered by backwashing the filter. Although a combination of a hydrocyclone and a filter has been exemplified here, the solid-liquid separation device may be configured with only a filter without using a hydrocyclone. Further, the precipitate may be separated from the solution by natural sedimentation, or the precipitate may be separated from the solution by a separator. This separator includes a partition plate and a mesh provided in a liquid phase, and is capable of passing the liquid through the mesh by controlling the liquid level and filtering out the precipitate with the mesh.

The solution separated by the solid-liquid separation device 30 is transferred through a flow path L5. When the solution contains the amine compound A, the amine compound A may be, for example, transferred to the absorption device 20 and reused for separating and recovering carbon dioxide from the gas. The flow path L5 may be joined to the flow path L10 or the flow path L9, or may be directly joined to the absorption device 20.

The precipitate (slurry containing the precipitate) obtained from the solid-liquid separation device 30 is transferred to the storage container 40 through a flow path L6. The storage container 40 is for temporarily storing the precipitate. By storing the precipitate, carbon dioxide can be desorbed from the precipitate at an arbitrary timing to obtain the amine compound A. Therefore, by using clean energy, carbon dioxide can be desorbed from the precipitate to obtain the amine compound A. In existing methods for separating and recovering carbon dioxide using an amine solution, the amine compound after recovering carbon dioxide exists in a state dissolved in the solution. Therefore, if the amine compound is to be stored after absorbing carbon dioxide, it needs to be stored in the state of an amine solution, which requires a huge tank for storing the amine solution, leading to an increase in equipment costs, but by using the amine compound A that solidifies by absorbing carbon dioxide, the storage tank can be made smaller than when storing it in the state of an amine solution. This makes it possible to separate and recover carbon dioxide from a gas containing carbon dioxide while suppressing an increase in equipment costs and without increasing the amount of newly generated carbon dioxide to be separated and recovered. Further, by temporarily storing the precipitate, desorption of carbon dioxide from the precipitate can also be performed during an upward demand response of energy, which also makes it possible to suppress energy costs.

The precipitate stored in the storage container 40 is transferred to the regeneration device 50 through a flow path L7 at the timing of desorbing carbon dioxide. The regeneration device 50 is for desorbing carbon dioxide from the precipitate and obtaining the amine compound A by using clean energy.

Clean energy means energy generated by a power generation method that generates as little carbon dioxide as possible during power generation, such as solar power generation, wind power generation, hydropower generation, geothermal power generation, biomass power generation, and nuclear power generation. That is, the clean energy may be energy generated by at least one power generation method selected from the group consisting of solar power generation, wind power generation, hydropower generation, geothermal power generation, biomass power generation, and nuclear power generation. Further, clean energy is also referred to as carbon-neutral energy.

In the regeneration device 50, the energy for desorbing carbon dioxide from the precipitate preferably consists substantially of clean energy from the viewpoint of not increasing the amount of newly generated carbon dioxide to be separated and recovered, but a part of the energy may be supplied by energy other than clean energy. The proportion of clean energy in the energy for desorbing carbon dioxide from the precipitate may be, for example, 70% or more, 80% or more, or 90% or more, from the viewpoint of not increasing the amount of newly generated carbon dioxide to be separated and recovered.

The desorption of carbon dioxide from the precipitate is performed, for example, by heating the precipitate. That is, the regeneration device 50 may be a heating device.

The carbon dioxide desorbed from the precipitate is transferred through a flow path L8 and stored, for example, underground. This allows the recovered carbon dioxide to be confined underground. Further, the recovered carbon dioxide may be stored in a storage container such as a cylinder.

By heating the precipitate, carbon dioxide is desorbed from the precipitate, and the amine compound A is generated. The amine compound A obtained by desorbing carbon dioxide from the precipitate is transferred through a flow path L9. The amine compound A may be, for example, transferred to the absorption device 20 and reused for separating and recovering carbon dioxide from the gas. This allows a series of processes of separating and recovering carbon dioxide, generating the amine compound A from the precipitate, and reusing the amine compound A to be integrated.

### [Method for Separating and Recovering Carbon Dioxide]

A method for separating and recovering carbon dioxide from a gas using the system 100 will be described. For the method for separating and recovering carbon dioxide, the description regarding the carbon dioxide separation and recovery system described above can be referred to as appropriate. The method for separating and recovering carbon dioxide according to the present embodiment includes at least the following steps. (a) A step of separating carbon dioxide from a gas containing carbon dioxide, the step comprising obtaining a precipitate by bringing a solution of an amine compound A, which has a property of solidifying by reacting with carbon dioxide, into contact with the gas. (b) A step of storing the precipitate. (c) A step of desorbing carbon dioxide from the stored precipitate and obtaining the amine compound A by using clean energy.

### <Step (a)>

Step (a) is, as described above, a step of obtaining a precipitate by bringing a solution of the amine compound A, which has a property of solidifying by reacting with carbon dioxide, into contact with a gas. The amine compound A is as described above.

The method for bringing the solution of the amine compound A into contact with the gas is not particularly limited, and a method that increases the contact area between the solution and the air is preferable. For example, gas-liquid contact may be performed by a scrubber. The method for separating and recovering carbon dioxide may further comprise a step of removing gases other than carbon dioxide using an adsorbent or the like before or after step (a).

### <Step (b)>

Step (b) is, as described above, a step of storing the precipitate. The storage of the precipitate may be under an environment where the precipitate does not denature, and for example, the precipitate may be stored under a room temperature, normal pressure environment. The method for separating and recovering carbon dioxide may further comprise a step of performing solid-liquid separation of the solution and the precipitate between step (a) and step (b).

By the step of performing solid-liquid separation of the solution and the precipitate, a slurry containing the precipitate is separated from the solution. The slurry is a suspension containing water and the precipitate, and the content of the precipitate with respect to the total mass of the slurry is, for example, 10 to 50% by mass, or 20 to 40% by mass. When the content of the precipitate is 10% by mass or more, the energy required for heating the slurry in the step of regenerating the amine compound A from the precipitate tends to be small. When the content of the precipitate is 50% by mass or less, the energy required for solid-liquid separation tends to be small.

### <Step (c)>

Step (c) is, as described above, a step of desorbing carbon dioxide from the precipitate stored in step (b) and obtaining the amine compound A by using clean energy. The clean energy is as described above.

The desorption of carbon dioxide from the precipitate can be performed, for example, by heating the precipitate. The heating temperature is, for example, 50 to 150°C, preferably 60 to 140°C, and more preferably 60 to 120°C. When the heating temperature is 60°C or higher, the amine compound A tends to be sufficiently regenerated, and when the heating temperature is 150°C or lower, decomposition of the generated amine compound A tends to be suppressed. As a method for desorbing carbon dioxide from the precipitate by a method other than heating, for example, a method of placing the precipitate in an environment with a low partial pressure of carbon dioxide and desorbing carbon dioxide from the precipitate can be mentioned.

Step (c) may be performed during a time period in a day when the supply of clean energy is large. This makes it easier to separate and recover carbon dioxide from a gas containing carbon dioxide without further increasing the amount of carbon dioxide to be separated and recovered. For example, when the clean energy is energy generated by solar power generation, by performing step (c) using the energy from solar power generation during the daytime and not performing step (c) at night, carbon dioxide can be separated and recovered from a gas containing carbon dioxide without increasing the amount of carbon dioxide to be separated and recovered.

Step (c) may be performed during a time period in a day when the energy demand is low. For example, when the clean energy is energy generated by nuclear power generation, step (c) is not performed during the daytime because the energy demand is high, and the implementation of thermal power generation and the like can be suppressed, so an increase in the amount of carbon dioxide to be separated and recovered can be suppressed. On the other hand, performing step (c) at night is preferable because surplus energy can be effectively utilized. Incidentally, although surplus energy is generated at night because the energy demand decreases and is used for storage batteries and the like, use for storage batteries and the like is not preferable because the energy loss is large. Furthermore, during a time period when the energy demand is low, the energy cost is also generally low, which is also preferable in this respect.

Step (c) may be performed during an upward demand response of energy. Demand response means changing the energy demand pattern by controlling energy resources, and an upward demand response time means a time when the energy demand pattern is shifting in a direction to increase the demand amount. Since energy costs are generally low during an upward demand response, it is preferable to perform step (c) during the upward demand response.

The method for separating and recovering carbon dioxide may further comprise a step of storing the carbon dioxide recovered through step (c) underground. By performing this step, the recovered carbon dioxide can be confined underground. The carbon dioxide recovered through step (c) may be stored in a storage container such as a cylinder. By performing this step, the recovered carbon dioxide can be transported.

The method for separating and recovering carbon dioxide may further comprise a step of reusing the amine compound A generated in step (c) in step (a). By performing this step, a series of processes of separating and recovering carbon dioxide, generating the amine compound A from the precipitate, and reusing the amine compound A can be carried out in an integrated manner.

### Reference Signs List

L1, L2, L3, L4, L5, L6, L7, L8, L9, L10: flow path; 10: cooling device; 20: carbon dioxide absorption device; 30: solid-liquid separation device; 40: storage container; 50: amine regeneration device; 100: carbon dioxide separation and recovery system.

## Claims

1. A method for separating and recovering carbon dioxide, comprising:
(a) a step of separating carbon dioxide from a gas containing carbon dioxide, the step comprising obtaining a precipitate by bringing a solution of an amine compound A, which has a property of solidifying by reacting with carbon dioxide, into contact with the gas;
(b) a step of storing the precipitate; and
(c) a step of desorbing carbon dioxide from the stored precipitate and obtaining the amine compound A by using clean energy,
wherein in one day, there is a time period during which step (c) is performed and a time period during which step (c) is not performed.

2. The method for separating and recovering carbon dioxide according to claim 1, wherein a supply amount of the clean energy during the time period in which step (c) is performed is larger than a supply amount of the clean energy during the time period in which step (c) is not performed.

3. The method for separating and recovering carbon dioxide according to claim 1, wherein an energy demand amount during the time period in which step (c) is performed is smaller than an energy demand amount during the time period in which step (c) is not performed.

4. The method for separating and recovering carbon dioxide according to claim 1, wherein the time period in which step (c) is performed is during an upward demand response of energy.

5. The method for separating and recovering carbon dioxide according to any one of claims 1 to 4, further comprising a step of storing the carbon dioxide recovered through step (c) underground.
